# DEMANDE DE BREVET EUROPEEN

(11) **EP 0 822 432 A1**
(43) Date de publication de la demande: **04.02.1998**
(21) Numéro de dépôt: 97401811.1
(22) Date de dépôt: 28.07.1997
(51) Int. Cl.: G02B 6/44

(54) **Multi-ruban de fibres optiques**

(30) Priorité: 01.08.1996 FR 9609724
(71) Demandeur: Alcatel Cable France, 92110 Clichy (FR)
(72) Inventeur: Bourghelle, Patrick, 93200 Saint-Denis (FR); Mc Nutt, Christopher, Hickory, NC 28602 (US); Benzel, David, 92200 Neuilly sur Seine (FR)
(74) Mandataire: Buffière, Michelle

(57) **Abrégé**

Le multi-ruban de fibres optiques comporte des rubans initiaux de fibres optiques, munis de leur gaine individuelle d'assemblage de leurs propres fibres et disposés côte à côte dans un même plan, et une gaine commune extérieure entourant les rubans initiaux.

Il est caractérisé en ce que les gaines individuelles (3) des rubans initiaux (1) et la gaine commune extérieure (6) sont en une même résine, avantageusement relativement dure.

Application : câble optique haute densité de télécommunication

## Description

La présente invention concerne les rubans de fibres optiques. Elle porte plus particulièrement sur un multi-ruban de fibres optiques, dont les fibres optiques sont celles d'au moins deux rubans initiaux indépendants, disposés côte à côte dans un même plan et assemblés dans une gaine commune extérieure les entourant.

Un tel multi-ruban peut ainsi comporter avantageusement un nombre important de fibres optiques pour être utilisé pour la fabrication d'un câble optique haute densité, par exemple un câble de télécommunication.

Le document EP-A-0636 913 divulgue un ruban de fibres optiques dont les fibres sont disposées côte à côte et sont ainsi assemblées. En particulier, ce ruban comporte au moins deux rubans initiaux indépendants et une gaine commune extérieure autour des rubans initiaux. Dans chaque ruban initial, les différentes fibres de ce ruban initial, qui sont munies de leur revêtement individuel de protection, sont disposées côte à côte et entourées d'une gaine commune d'assemblage.

Le revêtement extérieur de protection de chaque fibre est en une résine conventionnelle, relativement dure, qui est choisie notamment parmi les résines thermodurcissables ou réticulables par exemple aux UV. Cette résine est utilisée en tant que constituant principal de la gaine d'assemblage des fibres de chacun des rubans initiaux et de la gaine extérieure commune entourant les différents rubans initiaux.

En particulier la gaine extérieure commune autour des rubans initiaux comporte ce constituant principal en résine relativement dure et un composant qui est de faible compatibilité avec ce constituant principal. Dans un mode préféré de réalisation, un groupement fonctionnel réactif est introduit dans ce composant et ainsi incorporé dans la résine formant le constituant principal, quand celle-ci est réticulée. Dans un autre mode préféré de réalisation le composant de faible compatibilité qui est réticulé seul a un module de Young plus faible que celui du constituant principal et forme une phase discontinue de 5 microns ou moins après réticulation de la résine. L'addition d'un tel composant de faible compatibilité dans le constituant en résine décroît le coefficient de friction de la résine résultante dans laquelle il a été incorporé.

Ces modes de réalisation sont relativement complexes à mettre en oeuvre. En outre, l'absence de friction suffisante entre la gaine commune extérieure et les gaines des rubans initiaux fait que le maintien géométrique des rubans n'est pas toujours satisfaisant pour un épissurage de masse par fusion des fibres de ces rubans initiaux ou de ce multi-ruban à celles d'autres rubans initiaux analogues ou d'un autre multi-ruban analogue. Par ailleurs, la séparation du multi-ruban en ses rubans initiaux n'est pas aisée à réaliser. Elle tire parti de ce que la résine extérieure comportant le composant de faible compatibilité est en fait rendue pelable.

La présente invention a pour but de résoudre ces problèmes, pour la réalisation aisée d'un multi-ruban facilement sécable pour séparer les rubans initiaux.

Elle a pour objet un multi-ruban de fibres optiques, comportant au moins deux rubans initiaux de fibres optiques, munis individuellement d'une première gaine commune d'assemblage côte à côte et dans un même plan des propres fibres de chacun d'eux et disposés eux-mêmes côte à côte et dans le même plan, et une deuxième gaine commune extérieure entourant lesdits rubans initiaux, caractérisé en ce que les premières gaines individuelles desdits rubans initiaux et la deuxième gaine commune extérieure sont en une même résine.

Avantageusement, lesdites gaines sont en résine relativement dure.

Ce multi-ruban comporte une ligne transversale de rupture préférentielle, passant par chaque point de contact entre deux rubans initiaux consécutifs.

Les caractéristiques et avantages de la présente invention ressortiront de la description faite ci-après en regard d'un exemple de réalisation illustré dans les dessins ci-annexés. Dans ceux-ci :
- la figure 1 montre un ruban de fibres optiques, de type connu,
- la figure 2 montre un multi-ruban de fibres optiques, selon l'invention,

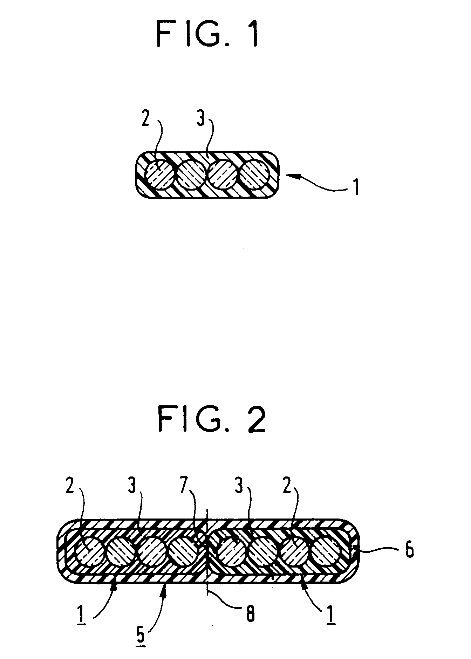

Dans la figure 1, le ruban de fibres optiques désigné par la référence 1 comporte quatre fibres optiques 2 disposées côte à côte dans un même plan et maintenues ainsi par une gaine d'assemblage 3. La gaine 3 est en résine conventionnelle polymérisable de module de Young relativement élevé, pour une dureté relativement élevée après son traitement de mise en oeuvre. Ces fibres sont bien entendu munies individuellement, au départ, de leur couche de protection conventionnelle, simple ou double épaisseur, non représentée.

Dans la figure 2, le multi-ruban selon l'invention désigné par la référence globale 5 comporte deux rubans initiaux 1 qui sont disposés côte à côte dans un même plan et sont ainsi maintenus par une gaine extérieure commune 6. Ces deux rubans initiaux forment deux sous-ensembles dans le multi-ruban. La gaine extérieure commune 6 est réalisée en même résine que celle des gaines 3 de l'un et l'autre des rubans initiaux 1 et est donc relativement dure après son traitement de mise en oeuvre.

Dans ce multi-ruban, la gaine extérieure commune 6 réalisée sur les gaines 3 adhère bien sur celles-ci. Par contre, le point intérieur 7 de contact entre les gaines 3 des deux rubans initiaux 1 crée de part et d'autre une ligne de rupture préférentielle 8, transversale au multi-ruban.

Cette ligne de rupture 8 permet une séparation rapide et aisée des rubans initiaux 1, qui peut être faite à la main.

La gaine 6 maintient parfaitement les deux rubans côte à côte et dans un même plan. Les caractéristiques géométriques des rubans initiaux sont parfaitement conservées dans le multi-ruban 5 et le sont également après leur séparation, pour un épissurage des fibres à celles d'autres rubans identiques aux rubans 1. Ce multi-ruban utilisant une seule résine de gainage des rubans initiaux et de gainage du multi-ruban simplifie les lignes de fabrication des rubans initiaux et du multi-ruban et réduit les temps de fabrication et la consommation globale de résine, celle-ci étant prévue de même nature et non pas de deux natures différentes pour le multi-ruban comme ses rubans initiaux.

Les rubans initiaux tels que 1 peuvent bien entendu comporter le nombre de fibres souhaité, soit en général 2, 4, 6 ou 12 fibres. De même le multi-ruban peut comporter 2 ou plus de rubans initiaux sous la même gaine commune extérieure.

## Revendications

1. Multi-ruban de fibres optiques, comportant au moins deux rubans initiaux (1) de fibres optiques (2), munis individuellement d'une première gaine commune (3) d'assemblage côte à côte et dans un même plan des propres fibres de chacun d'eux et disposés eux-mêmes côte à côte et dans le même plan, et une deuxième gaine commune extérieure (6) entourant lesdits rubans initiaux, caractérisé en ce que les premières gaines individuelles (3) desdits rubans initiaux et la deuxième gaine commune extérieure (6) sont en une même résine.

2. Multi-ruban selon la revendication 1, caractérisé en ce que lesdites gaines sont en résine relativement dure.

3. Multi-ruban selon l'une des revendications 1 et 2, caractérisé en ce qu'il comporte une ligne transversale de rupture préférentielle (8) passant par chaque point de contact (7) entre deux rubans initiaux consécutifs (1).
